# EUROPEAN PATENT SPECIFICATION

(11) **EP 4 123 208 B1**
(45) Date of publication and mention of the grant of the patent: **26.07.2023**
(21) Application number: 22184032.5
(22) Date of filing: 11.07.2022
(51) Int. Cl.: F16L 37/42, F16L 55/115

(54) **A DEVICE ARRANGED FOR BEING PROVIDED AT AN END OF A TUBE HAVING AN AXIAL DIRECTION**
VORRICHTUNG, DIE AN EINEM ENDE EINES ROHRES BEREITGESTELLT WERDEN KANN, DAS EINE AXIALE RICHTUNG AUFWEIST
DISPOSITIF CONÇU POUR ÊTRE FOURNI À L'EXTRÉMITÉ D'UN TUBE DOTÉ D'UNE DIRECTION AXIALE

(30) Priority: 23.07.2021 NL 2028822
(43) Date of publication of application: 25.01.2023
(73) Proprietor: Roteal B.V., 9407 TE Assen (NL)
(72) Inventor: LOORBACH, Richt, ASSEN (NL); DE WEERD, René, ASSEN (NL)
(74) Representative: Algemeen Octrooi- en Merkenbureau B.V.

(56) References cited:
- WO-A1-2021/071355
- GB-A- 571 373

## Description

The present disclosure relates to a device arranged for being provided at an end of a tube having an axial direction, such as a water supply tube, wherein said device in a first condition of said device closes said end of said tube and in a second condition of said device allowing said fluid to enter and/or exit said end of said tube.

A tube may have to be pressure tested and/or to be provided at a predetermined pressure, for instance as part of a pipe system. This may be realised using a combination of known devices to create a connection that allows to test the tube as part of the pipe system. The known devices may for instance comprises a known tap and coupling that are to be arranged at the tube by providing a screw thread at the outer end of the tube or soldering the coupling to the tube. A drawback of the combination of known devices is that it is rather cumbersome to prepare the tube for the test or allow the tube to be provided at the predetermined pressure.

The device according to the present disclosure comprises a sealing element arranged for being in contact with an outer surface of said tube, said sealing element comprising a clamping portion for clamping, via said sealing element, said device onto said tube and a sealing portion provided with a first opening arranged for a fluid to enter and/or exit said tube. By providing a sealing element with a clamping portion, the device may be provided to the tube without the need for soldering or for providing a screw tread.

By providing the sealing element with a clamping portion and a sealing portion, the functionality of clamping and sealing may be at least partly separated, preferably completely separated, thereby allowing to realise a relative good sealing and clamping without the need for use of a glue. Furthermore, the sealing functionality of the device may be realised relatively independently from the clamping functionality.

The device further comprises a clamping element arranged for, in a first state of said clamping element, transferring a clamping force onto said clamping portion of said sealing element for realising, via said sealing element, said clamping and arranged for, in a second state of said clamping element, allowing said device to be removed from said tube.

The present disclosure relies at least partly on the insight that the known combination of devices may not allow removal of the known combination of the known devices of the tube while maintaining a length of the tube unaffected. Commonly, the combination of known devices is removed from the tube by cutting a piece provided with the known device from the tube. By providing the sealing element that may be pressed against an outer wall of the tube via the clamping element, a device is realised that may be removed from the tube without the need for cutting an end part of the tube from the tube. Prior to removal of the device from the tube, the clamping element may be brought in the second state thereby allowing removal of the device from the tube using a relative low force.

The device is provided with an actuation element arranged for moving said clamping element in said first state or said second state by rotation of said actuation element about an actuation axis. The document WO 2021/071355 A1 discloses a cap comprising similar sealing, clamping and actuation elements that enable an easy installation on a pipe end. This known cap, unlike the claimed device, is intended to seal the pipe end permanently.

The device is further provided with a valve element arranged for in a first position of said valve element blocking said first opening such that said end of said tube is closed and in a second position unblocking said first opening such that said fluid is allowed to enter and/or exit said tube via said first opening.

The present disclosure relies at least partly on the insight that with the current combination of known devices, it is relatively difficult to close said tube such that no fluid leaks from the tube. This may be detrimental to the environment and/or negatively affect the testing of the tube or pressurizing the tube.

The present disclosure further at least relies on the insight that known piping systems, such as a central heating system in a house, may comprise only one combination of the known devices for pressurizing the piping systems. The central heating system may comprise only one combination of known devices, for instance near a boiler, for pressurizing the system. Using the known combination of devices, providing only such combination in a piping system is beneficial for reducing the risks of leakages and allowing to realize the piping system at relative low cost. The device according to the present disclosure at least reduces the risk of leakages. In addition, by clamping the device onto the tube, instead of using a screw thread or soldering, the device may be provided on the tube in a relative short time period thereby avoiding, or at least reducing additional installation costs for providing the piping systems with a plurality of devices at different locations.

Preferably, said sealing element, said clamping element, said actuation element and/or said valve element is/are rotation symmetric. This is beneficial for realising a device that is relatively easy to use.

Preferably, said sealing element comprises a resilient material, preferably a material comprising rubber. A resilient material, preferably comprising rubber, is beneficial for realising a relative large friction coefficient between the tube and the closing element for realising a relative large clamping force without the need for a relative large clamping portion.

It is advantageous if a diameter of said sealing portion is smaller than a diameter of said clamping portion.

Preferably, said sealing portion is formed by a bottom part of the sealing element comprising said first opening and arranged for capping, in use, said tube, and a wall part extending away from said bottom part, preferably wherein said wall part encloses an angle of substantially 90 degrees with said bottom part. An angle of substantially 90 degrees is beneficial for allowing the wall part, during use, to extend along an axial direction of the tube.

In an embodiment of the sealing element, a diameter of said sealing portion in a direction facing away from said clamping portion increases.

It is beneficial if said clamping element is arranged for moving relative to said actuation element in an axial direction for bringing said clamping element in said first state and/or wherein said clamping element is arranged for moving relative to said valve element in said axial direction for bringing said valve element in said first position or said second position.

In this regard, it is advantageous if one of said clamping element and said actuation element is provided with first protrusions and the other of said clamping element and said actuation element is provided with first recesses, wherein said first recesses are arranged for cooperation with said first protrusions for realising, in use, said moving in said axial direction of said clamping element relative to said actuation element and/or wherein one of said clamping element and said valve element is provided with second protrusions and the other of said clamping element and said valve element is provided with second recesses, wherein said second recesses are arranged for cooperation with said second protrusions for realising, in use, said moving in said axial direction of said clamping element relative to said valve element.

Preferably, said first protrusions, said first recesses, said second protrusions and/or said second recesses are equally spaced along a circumference of said clamping element, said actuation element or said valve element, respectively. This is beneficial for realising a relative evenly distributed application of force around the perimeter of the clamping element. In addition, this is beneficial for realising a relative reliable and controlled moving in said axial direction of said clamping element when rotating the clamping element relative to the actuation element.

It is beneficial if said device comprises six of said first protrusions, six of said first recesses, six of said second protrusions and six of said second recesses. This is beneficial for realizing a reliable functioning of the device while avoiding the need for use of a relative large amount of material for manufacturing the clamping element.

It is advantageous if said first protrusions and said first recesses are arranged for bringing said clamping element from said second state into said first state by rotating, in use, said actuation element relative to said clamping element, about a rotation axis, through an angle in the range of 60 - 120 degrees, preferably 90 degrees, and/or wherein said second protrusions and said second recesses are arranged for bringing said valve element from said second position into said first position by rotating, in use, said valve element relative to said clamping element, about a rotation axis, through an angle in the range of 60 - 120 degrees, preferably 90 degrees. This is beneficial for realising a relative large clamping force without the need for rotating the clamping element relative to the actuation element over a relative large angle.

Preferably, said rotation axis is substantially parallel, preferably parallel, more preferably identical, to said actuation axis.

In an embodiment of the device according to the present disclosure, said valve element comprises a closing member arranged for blocking said first opening when said valve element is in said first position.

In this regard, it is beneficial if said valve element comprises a first valve element section and a second valve element section that are releasably attached to each other. This is beneficial for manufacturing said valve element by plastic injection moulding.

Preferably, said first valve element section comprises said closing member.

Preferably, said second valve element section comprises said one of said second protrusions and said second recesses.

Preferably, said valve element is partly received in said first opening for blocking said first opening. Partly receiving said valve element in said first opening is beneficial for realising a relative reliable blocking.

In this regard, it is advantageous if said closing member comprises a third opening for allowing said fluid to enter and/or exit said device, via said third opening, when said valve element is in said second position.

Preferably, said device comprises a further sealing element arranged for sealing a space between said closing member and said clamping element. This is beneficial for realising a relative good sealing of the device when the valve element is in the first position.

In this regard, it is advantageous, if one of said closing member and said clamping element is provided with a third recess and wherein said further sealing element is received in said third recess. This is beneficial for realising a relative good sealing of the device when the valve element is in the first position.

Preferably, said valve element is provided with a screw thread arranged for cooperating with a further screw thread of a hose element or pressure sensor for coupling said hose element or pressure sensor to said device.

Preferably, said second valve element section comprises said screw thread.

Preferably, said clamping element comprises a second opening for receiving said sealing portion of said sealing element with said first opening thereof.

It is advantageous if said device is free from metal. This is beneficial for allowing to realise a relative cost attractive device.

Preferably, the device is made of rubber and plastic.

Preferably, said clamping element comprises a first clamping element section and a second clamping element section that are releasably attached to each other. This is beneficial for allowing said clamping element to be manufactured by plastic injection moulding.

Preferably, said first clamping element section comprises said one of said first protrusions and said first recesses and said second clamping element section comprises said one of said second protrusions and said second recesses.

Within the context of the present disclosure a hose is to be understood as a flexible element that may for instance be made of a rubber.

Preferably, the device is arranged for being provided at the end of a rigid tube such as a tube made from a metal such as steel or copper.

Embodiments of the device according to the present disclosure will next be explained by means of the accompanying schematic figures, wherein:

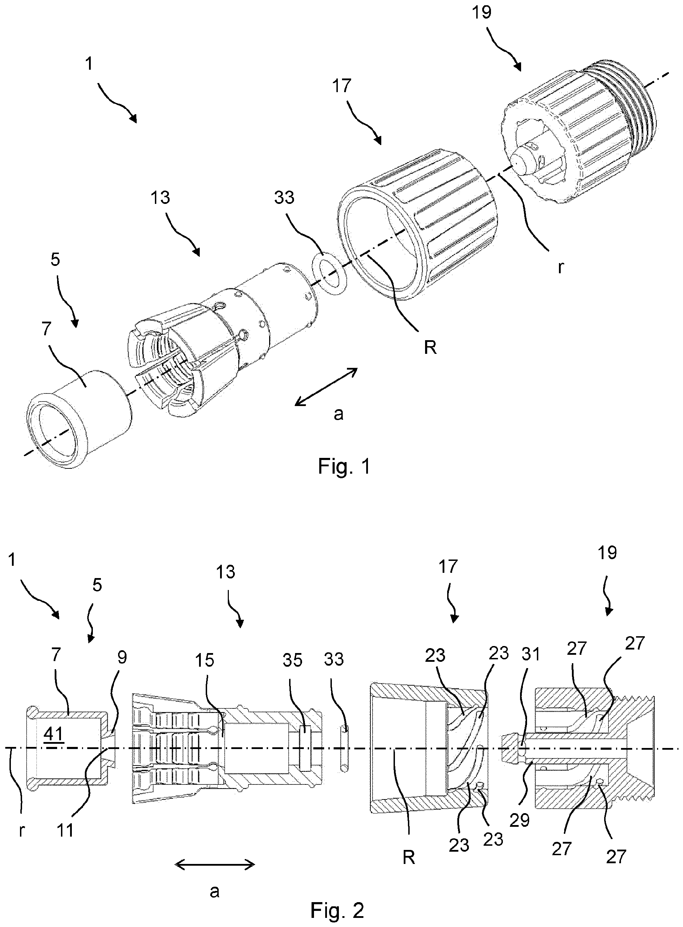

Fig. 1 in exploded view elements of a device according to the present disclosure are shown;
Fig. 2 in exploded view a cross-section of the device of Fig. 1 is shown;

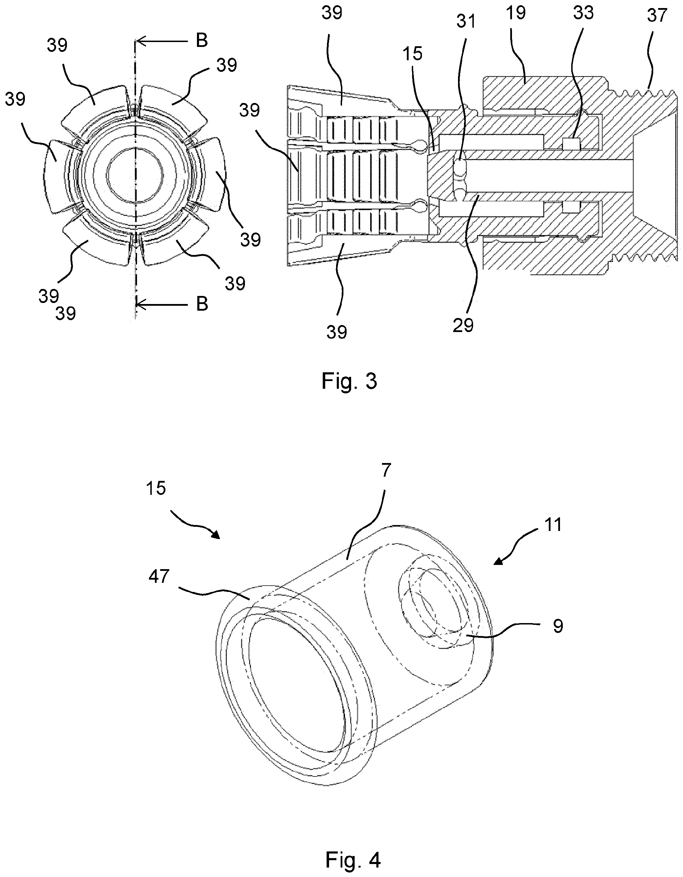

Fig. 3 a front view and a cross-section B-B of elements of the device according to the present disclosure are shown;
Fig. 4 an isometric transparent view of an element of the device of Fig. 1 is shown;

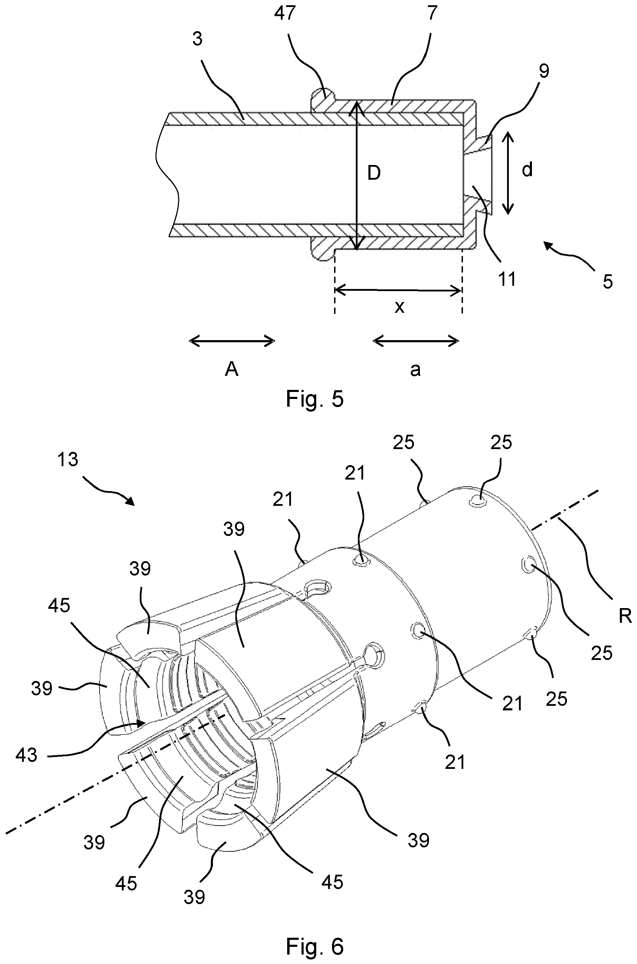

Fig. 5 a cross-sectional view of an assembly of a part of a tube and the element of Fig. 4 is shown;
Fig. 6 an isometric view of another element of the device of Fig. 1 is shown;

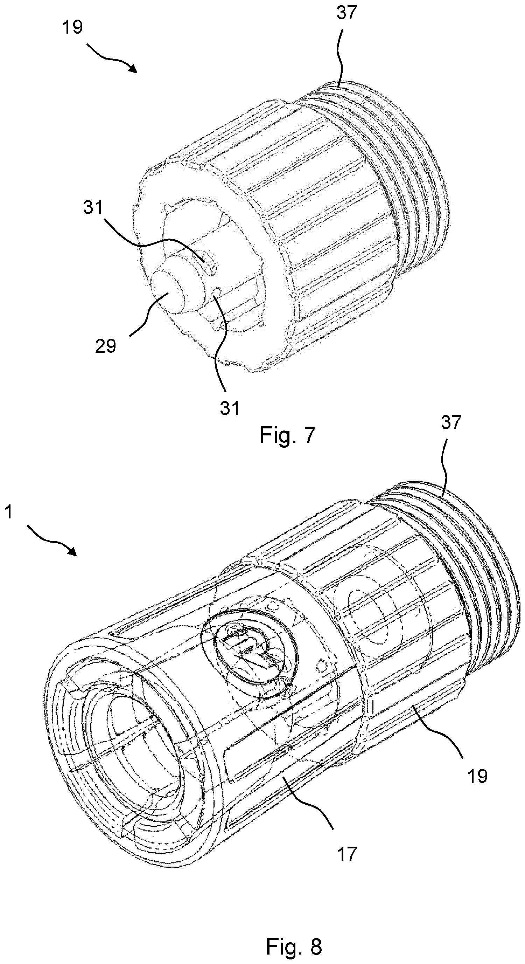

Fig. 7 an isometric view of yet another element of the device of Fig. 1 is shown;
Fig. 8 an isometric transparent view of mutual connected elements of the device of Fig. 1 is shown;

Device 1 is arranged for being provided at an end of a tube 3 having an axial direction A, such as a water supply tube. The device 1 is free from metal and is arranged to close the end of the tube 3 in a first condition of the device 1, and is arranged to allow fluid to enter and/or exit the end of the tube 3 in a second condition of the device 1. The device 1 comprises a sealing element 5, a clamping element 13, an actuation element 17, and a valve element 19. In use of the device 1, when the device 1 is applied to the tube 3, the axial direction A of the tube 3 is parallel to an axial direction a of the device 1. The sealing element 5, the clamping element 13, the actuation element 17 and the valve element 19 are rotation symmetric about a rotation axis r.

The sealing element 5 is arranged for being in contact with an outer surface of the tube 3. The sealing element 5 comprises a rubber material for realising a relative elastic material for allowing the sealing element 5 to be deformed under the influence of a force applied to the sealing element 5. The sealing element 5 comprises a clamping portion 7 for clamping, via the sealing element 5, the device 1 onto the tube 3. The clamping portion 7 comprises a thickened wall part 47. The sealing element 5 furthermore comprises a sealing portion 9 provided with a first opening 11 arranged for fluid to enter and/or exit the tube 3. The diameter d of the sealing portion 9 is smaller than a diameter D of the clamping portion 7 and increases in a direction facing away from the clamping portion 7. The sealing element 5 encloses a receiving space 41 arranged for receiving an end part of the tube 3. The clamping force applied, during use, by the device 1, via the sealing element 5, is dependent on the length x of the clamping portion 7. A relative large clamping force for a given tube diameter may be realised by a clamping portion 7 extending along a relative large distance x.

The clamping element 13 is arranged for, in a first state of the clamping element 13, transferring a clamping force onto the clamping portion 7 of the sealing element 5 for realising, via the sealing element 5, the clamping by the device 1. Moreover, the clamping element 13 is arranged for, in a second state of the clamping element 13, allowing the device 1 to be removed from the tube 3. In the second state of the clamping element 13, the device 1 may be removed from the tube 3 with relative little effort, whereas in the first state of the clamping element 13, the device 1 is clamped to the tube 3 making it relative difficult to remove the device 1 from the tube 3. The clamping element 13 comprises a second opening 15 for receiving the sealing portion 9 of the sealing element 5 with the first opening 11 thereof. The second opening 15 is arranged for fluid to enter and/or exit the tube 3, via the first opening 11 and the second opening 15.

The clamping element 13 comprises six clamping organs 39 in the form of clamping fingers, that are distributed evenly along a circumference of the clamping element 13 and mutually spaced from each other. The clamping organs 39 at least partly bound a sealing element receiving space 43 arranged for receiving the sealing element 5. Each one of the clamping organs 39 is provided with a recess 45 on a side of the clamping organs 39 that, in use, is facing the sealing element 5. The recess 45 is arranged for at least partly receiving the thickened wall part 47 of the sealing element 5.

The actuation element 17 is arranged for moving the clamping element 13 in the first state or the second state by rotation of the actuation element 17 about an actuation axis R, wherein the actuation axis R is identical to the rotation axis r. The clamping element 13 is provided with first protrusions 21 and the actuation element 17 is provided with first recesses 23, wherein the first recesses 23 are arranged for cooperation with the first protrusions 21. The first protrusions 21 and the first recesses 23 are equally spaced along a circumference of the clamping element 13 and the actuation element 17, respectively. The clamping element 13 is arranged for moving relative to the actuation element 17 in an axial direction a for bringing the clamping element 13 in the first state due to an interaction of the first protrusions 21 and the first recesses 23.

By rotating the actuation element 17 in a clockwise direction about the rotation axis r through an angle of 90 degrees, the clamping element 13 is moved from the second state into the first state, thereby realizing the clamping force onto the clamping portion 7 of the sealing element 5. By realizing the clamping force onto the clamping portion 7, the clamping organs 39 of the clamping element 13 are clamped, via the sealing element 5 onto the tube 3 and thereby realizing the clamping of the device 1 onto the tube 3. By rotating the actuation element 17 in a counter-clockwise direction about the rotation axis r, the clamping element 13 is moved in the second state, thereby allowing the device 1 to be removed from the tube 3.

The valve element 19 comprises a closing member 29 arranged for in a first position of the valve element 19 blocking the first opening 11 of the sealing element 5, such that the end of the tube 3 is closed. In a second position of the valve element 19, the valve element 19 is arranged for unblocking the first opening 11 of the sealing element 5. The closing member 29 comprises a third opening 31, thereby allowing the fluid to enter and/or exit the device 1, via the third opening 31, when the valve element 19 is in the second position thereof. The clamping element 13 is provided with second protrusions 25 and the valve element 19 is provided with second recesses 27, wherein the second recesses 27 are arranged for cooperation with the second protrusions 25. The second protrusions 25 and the second recesses 27 are equally spaced along a circumference of the clamping element 13 and the valve element 19, respectively. The clamping element 13 is arranged for moving relative to the valve element 19 in the axial direction a for bringing the valve element 19 in the first position or the second position due to an interaction of the second protrusions 25 and the second recesses 27.

By rotating the valve element 19 in a clockwise direction about the rotation axis r through an angle of 90 degrees, the valve element 13 is moved from the second position into the first position, thereby moving the closing member 29 until the closing member 29 is received in the first opening 11 for blocking the first opening 11. By rotating the valve element 19 in a counter-clockwise direction about the rotation axis r, the valve element 13 is moved in the second position, thereby allowing fluid to enter and/or exit the tube 3 via the first opening 11, the second opening 15, and the third opening 31.

The device 1 comprises a further sealing element 33 arranged for sealing a space between the closing member 29 and the clamping element 13, wherein the clamping element 13 is provided with a third recess 35 for receiving the further sealing element 33.

The valve element 19 of the device 1 is further provided with a screw thread 37 arranged for cooperating with a further screw thread of a hose element or pressure sensor for coupling with the device 1.

## Claims

1. A device (1) arranged for being provided at an end of a tube (3) having an axial direction (A), such as a water supply tube, wherein said device (1) in a first condition of said device (1) closes said end of said tube (3) and in a second condition of said device (1) allowing fluid to enter and/or exit said end of said tube (3), said device (1) comprising:
- a sealing element (5) arranged for being in contact with an outer surface of said tube (3), said sealing element (5) comprising a clamping portion (7) for clamping, via said sealing element (5), said device (1) onto said tube (3) and a sealing portion (9) provided with a first opening (11) arranged for fluid to enter and/or exit said tube (3);
- a clamping element (13) arranged for, in a first state of said clamping element (13), transferring a clamping force onto said clamping portion (7) of said sealing element (5) for realising, via said sealing element (5), said clamping and arranged for, in a second state of said clamping element (13), allowing said device (1) to be removed from said tube (3);
- an actuation element (17) arranged for moving said clamping element (13) in said first state or said second state by rotation of said actuation element (17) about an actuation axis (R);
- a valve element (19) arranged for in a first position of said valve element (19) blocking said first opening (11) such that said end of said tube (3) is closed and in a second position unblocking said first opening (11) such that said fluid is allowed to enter and/or exit said tube (3) via said first opening (11).

2. The device (1) according to claim 1, wherein said sealing element (5), said clamping element (13), said actuation element (17) and/or said valve element (19) is/are rotation symmetric.

3. The device (1) according to claim 1 or 2, wherein said sealing element (5) comprises a resilient material, preferably a material comprising rubber.

4. The device (1) according any one of the preceding claims, wherein a diameter (d) of said sealing portion (9) is smaller than a diameter (D) of said clamping portion (7), preferably, wherein a diameter (d) of said sealing portion (9) in a direction facing away from said clamping portion (7) increases.

5. The device (1) according to any one of the preceding claims, wherein said clamping element (13) is arranged for moving relative to said actuation element (17) in an axial direction (a) for bringing said clamping element (13) in said first state and/or wherein said clamping element (13) is arranged for moving relative to said valve element (19) in said axial direction (a) for bringing said valve element (19) in said first position or said second position.

6. The device (1) according to claim 5, wherein one of said clamping element (13) and said actuation element (17) is provided with first protrusions (21) and the other of said clamping element (13) and said actuation element (17) is provided with first recesses (23), wherein said first recesses (23) are arranged for cooperation with said first protrusions (21) for realising, in use, said moving in said axial direction (a) of said clamping element (13) relative to said actuation element (17) and/or wherein one of said clamping element (13) and said valve element (19) is provided with second protrusions (25) and the other of said clamping element (13) and said valve element (19) is provided with second recesses (27), wherein said second recesses (27) are arranged for cooperation with said second protrusions (25) for realising, in use, said moving in said axial direction (a) of said clamping element (13) relative to said valve element (19).

7. The device (1) according to claim 6, wherein said first protrusions (21), said first recesses (23), said second protrusions (25) and/or said second recesses (27) are equally spaced along a circumference of said clamping element (13), said actuation element (17) or said valve element (19), respectively.

8. The device (1) according to claim 5, 6 or 7, wherein said first protrusions (21) and said first recesses (23) are arranged for bringing said clamping element (13) from said second state into said first state by rotating, in use, said actuation element (17) relative to said clamping element (13), about a rotation axis (r), through an angle in the range of 60 - 120 degrees, preferably 90 degrees, and/or wherein said second protrusions (25) and said second recesses (27) are arranged for bringing said valve element (19) from said second position into said first position by rotating, in use, said valve element (19) relative to said clamping element (13), about a rotation axis (r), through an angle in the range of 60 - 120 degrees, preferably 90 degrees.

9. The device (1) according to claim 8, wherein said rotation axis (r) is substantially parallel, preferably parallel, more preferably identical, to said actuation axis (R).

10. The device (1) according to any one of the preceding claims, wherein said valve element (19) comprises a closing member (29) arranged for blocking said first opening (11) when said valve element (19) is in said first position, preferably wherein said valve element (19) is partly received in said first opening (11) for blocking said first opening (11).

11. The device (1) according claim 10, wherein said closing member (29) comprises a third opening (31) for allowing said fluid to enter and/or exit said device (1), via said third opening (31), when said valve element (19) is in said second position.

12. The device (1) according to claim 10 or 11, wherein said device (1) comprises a further sealing element (33) arranged for sealing a space between said closing member (29) and said clamping element (13).

13. The device (1) according to claim 12, wherein one of said closing member (29) and said clamping element (13) is provided with a third recess (35) and wherein said further sealing element (33) is received in said third recess (35).

14. The device (1) according to any one of the preceding claims, wherein said valve element (19) is provided with a screw thread (37) arranged for cooperating with a further screw thread of a hose element or pressure sensor for coupling said hose element or pressure sensor to said device (1).

15. The device (1) according to any one of the preceding claims, wherein said clamping element (13) comprises a second opening (15) for receiving said sealing portion (9) of said sealing element (5) with said first opening (11) thereof.

## Patentansprüche

1. Vorrichtung (1), die an einem Ende eines Rohres (3) mit einer axialen Richtung (A), wie z. B. eines Wasserzufuhrrohres, bereitgestellt werden kann, wobei die Vorrichtung (1) in einem ersten Zustand der Vorrichtung (1) das Ende des Rohres (3) verschließt und in einem zweiten Zustand der Vorrichtung (1) den Eintritt und/oder den Austritt von Fluid in das bzw. aus dem Ende des Rohres (3) ermöglicht, wobei die Vorrichtung (1) umfasst:
ein Dichtungselement (5), das so angeordnet ist, dass es mit einer Außenfläche des Rohres (3) in Kontakt ist, wobei das Dichtungselement (5) einen Klemmabschnitt (7) zum Festklemmen der Vorrichtung (1) an dem Rohr (3) über das Dichtungselement (5) und einen Dichtungsabschnitt (9) umfasst, der mit einer ersten Öffnung (11) versehen ist, die dazu angeordnet ist, dass Fluid in das Rohr (3) eintreten und/oder daraus austreten kann;
- ein Klemmelement (13), das dazu angeordnet ist, in einem ersten Zustand des Klemmelements (13) eine Klemmkraft auf den Klemmabschnitt (7) des Dichtungselements (5) zu übertragen, um über das Dichtungselement (5) die Klemmung zu realisieren, und das dazu angeordnet ist,in einem zweiten Zustand des Klemmelements (13) das Entfernen der Vorrichtung (1) von dem Rohr (3) zu ermöglichen;
- ein Betätigungselement (17), das dazu angeordnet ist, das Klemmelement (13) durch Drehung des Betätigungselements (17) um eine Betätigungsachse (R) in den ersten Zustand oder den zweiten Zustand zu bewegen;
- ein Ventilelement (19), das dazu angeordnet ist, in einer ersten Position des Ventilelements (19) die erste Öffnung (11) zu sperren, sodass das Ende des Rohres (3) geschlossen ist, und in einer zweiten Position die erste Öffnung (11) freizugeben, sodass das Fluid über die erste Öffnung (11) in das Rohr (3) eintreten und/oder daraus austreten kann.

2. Vorrichtung (1) gemäß Anspruch 1, wobei das Dichtungselement (5), das Klemmelement (13), das Betätigungselement (17) und/oder das Ventilelement (19) rotationssymmetrisch ist/sind.

3. Vorrichtung (1) gemäß Anspruch 1 oder 2, wobei das Dichtungselement (5) ein elastisches Material, vorzugsweise ein Material aus Gummi, umfasst.

4. Vorrichtung (1) gemäß einem der vorhergehenden Ansprüche, wobei ein Durchmesser (d) des Dichtungsabschnitts (9) kleiner als ein Durchmesser (D) des Klemmabschnitts (7) ist, vorzugsweise, wobei ein Durchmesser (d) des Dichtungsabschnitts (9) in einer von dem Klemmabschnitt (7) abgewandten Richtung zunimmt.

5. Vorrichtung (1) gemäß einem der vorhergehenden Ansprüche, wobei das Klemmelement (13) relativ zu dem Betätigungselement (17) in einer axialen Richtung (a) bewegbar ist, um das Klemmelement (13) in den ersten Zustand zu bringen, und/oder wobei das Klemmelement (13) relativ zu dem Ventilelement (19) in der axialen Richtung (a) bewegbar ist, um das Ventilelement (19) in die erste Position oder die zweite Position zu bringen.

6. Vorrichtung (1) gemäß Anspruch 5, wobei eines aus dem Klemmelement (13) und dem Betätigungselement (17) mit ersten Vorsprüngen (21) versehen ist und das andere aus dem Klemmelement (13) und dem Betätigungselement (17) mit ersten Ausnehmungen (23) versehen ist, wobei die ersten Ausnehmungen (23) für ein Zusammenwirken mit den ersten Vorsprüngen (21) angeordnet sind, um beim Gebrauch die Bewegung in der axialen Richtung (a) des Klemmelements (13) relativ zu dem Betätigungselement (17) zu realisieren und/oder wobei eines aus dem Klemmelement (13) und dem Ventilelement (19) mit zweiten Vorsprüngen (25) versehen ist und das andere aus dem Klemmelement (13) und dem Ventilelement (19) mit zweiten Ausnehmungen (27) versehen ist, wobei die zweiten Ausnehmungen (27) dazu angeordnet sind, mit den zweiten Vorsprüngen (25) zusammenzuwirken, um beim Gebrauch die Bewegung des Klemmelements (13) relativ zu dem Ventilelement (19) in der axialen Richtung (a) zu realisieren.

7. Vorrichtung (1) gemäß Anspruch 6, wobei die ersten Vorsprünge (21), die ersten Ausnehmungen (23), die zweiten Vorsprünge (25) und/oder die zweiten Ausnehmungen (27) entlang eines Umfangs des Klemmelements (13), des Betätigungselements (17) bzw. des Ventilelements (19) gleichmäßig beabstandet sind.

8. Vorrichtung (1) gemäß Anspruch 5, 6 oder 7, wobei die ersten Vorsprünge (21) und die ersten Ausnehmungen (23) dazu angeordnet sind, das Klemmelement (13) aus dem zweiten Zustand in den ersten Zustand zu bringen, indem sie beim Gebrauch das Betätigungselement (17) relativ zum Klemmelement (13) um eine Drehachse (r) um einen Winkel im Bereich von 60 bis 120 Grad, vorzugsweise 90 Grad, drehen, und/oder wobei die zweiten Vorsprünge (25) und die zweiten Ausnehmungen (27) dazu angeordnet sind, das Ventilelement (19) aus der zweiten Position in die erste Position zu bringen, indem sie beim Gebrauch das Ventilelement (19) relativ zum Klemmelement (13) um eine Drehachse (r) um einen Winkel im Bereich von 60 bis 120 Grad, vorzugsweise 90 Grad, drehen.

9. Vorrichtung (1) gemäß Anspruch 8, wobei die Drehachse (r) im Wesentlichen parallel, vorzugsweise parallel, noch bevorzugter identisch zur Betätigungsachse (R) verläuft.

10. Vorrichtung (1) gemäß einem der vorhergehenden Ansprüche, wobei das Ventilelement (19) ein Schließelement (29) umfasst, das zum Sperren der ersten Öffnung (11) angeordnet ist, wenn sich das Ventilelement (19) in der ersten Position befindet, wobei vorzugsweise das Ventilelement (19) teilweise in der ersten Öffnung (11) zum Sperren der ersten Öffnung (11) aufgenommen ist.

11. Vorrichtung (1) gemäß Anspruch 10, wobei das Schließelement (29) eine dritte Öffnung (31) umfasst, die es dem Fluid ermöglicht, über die dritte Öffnung (31) in die Vorrichtung (1) einzutreten und/oder daraus auszutreten, wenn sich das Ventilelement (19) in der zweiten Position befindet.

12. Vorrichtung (1) gemäß Anspruch 10 oder 11, wobei die Vorrichtung (1) ein weiteres Dichtungselement (33) umfasst, das zum Abdichten eines Raums zwischen dem Schließelement (29) und dem Klemmelement (13) angeordnet ist.

13. Vorrichtung (1) gemäß Anspruch 12, wobei entweder das Schließelement (29) oder das Klemmelement (13) mit einer dritten Ausnehmung (35) versehen ist und wobei das weitere Dichtungselement (33) in der dritten Ausnehmung (35) aufgenommen ist.

14. Vorrichtung (1) gemäß einem der vorhergehenden Ansprüche, wobei das Ventilelement (19) mit einem Schraubgewinde (37) versehen ist, das zum Zusammenwirken mit einem weiteren Schraubgewinde eines Schlauchelements oder Drucksensors zum Koppeln des Schlauchelements oder Drucksensors an die Vorrichtung (1) angeordnet ist.

15. Vorrichtung (1) gemäß einem der vorhergehenden Ansprüche, wobei das Klemmelement (13) eine zweite Öffnung (15) zum Aufnehmen des Dichtungsabschnitts (9) des Dichtungselements (5) mit dessen erster Öffnung (11) umfasst.

## Revendications

1. Dispositif (1) agencé pour être fourni à une extrémité d'un tube (3) ayant une direction axiale (A), tel qu'un tube d'alimentation en eau, dans lequel ledit dispositif (1) dans un premier état dudit dispositif (1) ferme ladite extrémité dudit tube (3) et dans un deuxième état dudit dispositif (1) permet au fluide d'entrer dans et/ou de sortir de ladite extrémité dudit tube (3), ledit dispositif (1) comprenant :
- un élément d'étanchéité (5) agencé pour être en contact avec une surface externe dudit tube (3), ledit élément d'étanchéité (5) comprenant une partie de serrage (7) pour serrer, via ledit élément d'étanchéité (5), ledit dispositif (1) sur ledit tube (3) et une partie d'étanchéité (9) munie d'une première ouverture (11) agencée pour permettre au fluide d'entrer dans et/ou de sortir dudit tube (3) ;
- un élément de serrage (13) agencé, dans un premier état dudit élément de serrage (13), pour transférer une force de serrage sur ladite partie de serrage (7) dudit élément d'étanchéité (5) pour réaliser ledit serrage, via ledit élément d'étanchéité (5), et agencé, dans un deuxième état dudit élément de serrage (13), pour permettre le retrait dudit dispositif (1) dudit tube (3) ;
- un élément d'actionnement (17) agencé pour déplacer ledit élément de serrage (13) dans ledit premier état ou ledit deuxième état par rotation dudit élément d'actionnement (17) autour d'un axe d'actionnement (R) ;
- un élément de vanne (19) agencé, dans une première position dudit élément de vanne (19), pour bloquer ladite première ouverture (11) de sorte que ladite extrémité dudit tube (3) soit fermée et, dans une deuxième position, pour débloquer ladite première ouverture (11) de sorte que ledit fluide soit autorisé à entrer dans et/ou à sortir dudit tube (3) via ladite première ouverture (11).

2. Dispositif (1) selon la revendication 1, dans lequel ledit élément d'étanchéité (5), ledit élément de serrage (13), ledit élément d'actionnement (17) et/ou ledit élément de vanne (19) est/sont symétrique(s) en rotation.

3. Dispositif (1) selon la revendication 1 ou 2, dans lequel ledit élément d'étanchéité (5) comprend un matériau élastique, de préférence un matériau comprenant du caoutchouc.

4. Dispositif (1) selon l'une quelconque des revendications précédentes, dans lequel un diamètre (d) de ladite partie d'étanchéité (9) est inférieur à un diamètre (D) de ladite partie de serrage (7), de préférence, dans lequel un diamètre (d) de ladite partie d'étanchéité (9) dans une direction opposée à ladite partie de serrage (7) augmente.

5. Dispositif (1) selon l'une quelconque des revendications précédentes, dans lequel ledit élément de serrage (13) est agencé pour se déplacer par rapport audit élément d'actionnement (17) dans une direction axiale (a) pour amener ledit élément de serrage (13) dans ledit premier état et/ou dans lequel ledit élément de serrage (13) est agencé pour se déplacer par rapport audit élément de vanne (19) dans ladite direction axiale (a) pour amener ledit élément de vanne (19) dans ladite première position ou ladite deuxième position.

6. Dispositif (1) selon la revendication 5, dans lequel l'un dudit élément de serrage (13) et dudit élément d'actionnement (17) est muni de premières protubérances (21) et l'autre dudit élément de serrage (13) et dudit élément d'actionnement (17) est muni de premiers évidements (23), dans lequel lesdits premiers évidements (23) sont agencés pour coopérer avec lesdites premières protubérances (21) pour réaliser, en cours d'utilisation, ledit déplacement dans ladite direction axiale (a) dudit élément de serrage (13) par rapport audit élément d'actionnement (17) et/ou dans lequel l'un dudit élément de serrage (13) et dudit élément de vanne (19) est muni de deuxièmes protubérances (25) et l'autre dudit élément de serrage (13) et dudit élément de vanne (19) est muni de deuxièmes évidements (27), dans lequel lesdits deuxièmes évidements (27) sont agencés pour coopérer avec lesdites deuxièmes protubérances (25) pour réaliser, en cours d'utilisation, ledit déplacement dans ladite direction axiale (a) dudit élément de serrage (13) par rapport audit élément de vanne (19).

7. Dispositif (1) selon la revendication 6, dans lequel lesdites premières protubérances (21), lesdits premiers évidements (23), lesdites deuxièmes protubérances (25) et/ou lesdits deuxièmes évidements (27) sont également espacé(e)s le long d'une circonférence dudit élément de serrage (13), dudit élément d'actionnement (17) ou dudit élément de vanne (19), respectivement.

8. Dispositif (1) selon la revendication 5, 6 ou 7, dans lequel lesdites premières protubérances (21) et lesdits premiers évidements (23) sont agencés pour amener ledit élément de serrage (13) dudit deuxième état audit premier état par rotation, en cours d'utilisation, dudit élément d'actionnement (17) par rapport audit élément de serrage (13), autour d'un axe de rotation (r), sur un angle dans la plage allant de 60 à 120 degrés, de préférence 90 degrés, et/ou dans lequel lesdites deuxièmes protubérances (25) et lesdits deuxièmes évidements (27) sont agencés pour amener ledit élément de vanne (19) de ladite deuxième position à ladite première position par rotation, en cours d'utilisation, dudit élément de vanne (19) par rapport audit élément de serrage (13), autour d'un axe de rotation (r), sur un angle dans la plage allant de 60 à 120 degrés, de préférence 90 degrés.

9. Dispositif (1) selon la revendication 8, dans lequel ledit axe de rotation (r) est sensiblement parallèle, de préférence parallèle, plus préférablement identique, audit axe d'actionnement (R).

10. Dispositif (1) selon l'une quelconque des revendications précédentes, dans lequel ledit élément de vanne (19) comprend un élément de fermeture (29) agencé pour bloquer ladite première ouverture (11) lorsque ledit élément de vanne (19) est dans ladite première position, de préférence dans lequel ledit élément de vanne (19) est partiellement reçu dans ladite première ouverture (11) pour bloquer ladite première ouverture (11).

11. Dispositif (1) selon la revendication 10, dans lequel ledit élément de fermeture (29) comprend une troisième ouverture (31) pour permettre audit fluide d'entrer dans et/ou de sortir dudit dispositif (1), via ladite troisième ouverture (31), lorsque ledit élément de vanne (19) est dans ladite deuxième position.

12. Dispositif (1) selon la revendication 10 ou 11, dans lequel ledit dispositif (1) comprend un élément d'étanchéité supplémentaire (33) agencé pour étanchéifier un espace entre ledit élément de fermeture (29) et ledit élément de serrage (13).

13. Dispositif (1) selon la revendication 12, dans lequel l'un dudit élément de fermeture (29) et dudit élément de serrage (13) est muni d'un troisième évidement (35) et dans lequel ledit élément d'étanchéité supplémentaire (33) est reçu dans ledit troisième évidement (35).

14. Dispositif (1) selon l'une quelconque des revendications précédentes, dans lequel ledit élément de vanne (19) est muni d'un filetage de vis (37) agencé pour coopérer avec un filetage de vis supplémentaire d'un élément de tuyau ou d'un capteur de pression pour coupler ledit élément de tuyau ou ledit capteur de pression audit dispositif (1).

15. Dispositif (1) selon l'une quelconque des revendications précédentes, dans lequel ledit élément de serrage (13) comprend une deuxième ouverture (15) pour recevoir ladite partie d'étanchéité (9) dudit élément d'étanchéité (5) avec ladite première ouverture (11) de celui-ci.
